# EUROPÄISCHE PATENTSCHRIFT

(11) **EP 1 099 156 B1**
(45) Veröffentlichungstag und Bekanntmachung des Hinweises auf die Patenterteilung: **09.10.2002**
(21) Anmeldenummer: 99945924.1
(22) Anmeldetag: 05.07.1999
(51) Int. Cl.: G06F 9/318

(54) **SCHALTUNGSANORDNUNG UND VERFAHREN ZUR DATENKONVERTIERUNG IN EINEM PROZESSOR**
CIRCUIT AND METHOD FOR CONVERTING DATA IN A PROCESSOR
CIRCUIT ET PROCEDE DE CONVERSION DE DONNEES DANS UN PROCESSEUR

(30) Priorität: 31.07.1998 DE 19834632
(43) Veröffentlichungstag der Anmeldung: 16.05.2001
(73) Patentinhaber: SIEMENS AKTIENGESELLSCHAFT, 80333 München (DE)
(72) Erfinder: HAAS, Peter, D-85570 Markt Schwaben (DE)
(86) Internationale Anmeldenummer: DE9902086
(87) Internationale Veröffentlichungsnummer: WO00008553

(56) Entgegenhaltungen:
- US-A- 5 201 056
- PATENT ABSTRACTS OF JAPAN vol. 010, no. 160 (P-465), 7. Juni 1986 (1986-06-07) & JP 61 013345 A (FUJITSU KK), 21. Januar 1986 (1986-01-21)
- PATENT ABSTRACTS OF JAPAN vol. 012, no. 422 (P-783), 9. November 1988 (1988-11-09) & JP 63 157241 A (TOSHIBA CORP), 30. Juni 1988 (1988-06-30)
- PATENT ABSTRACTS OF JAPAN vol. 013, no. 019 (P-814), 18. Januar 1989 (1989-01-18) & JP 63 223833 A (FUJI XEROX CO LTD), 19. September 1988 (1988-09-19)
- D. A. MOON: "Symbolics Architecture" COMPUTER, Bd. 20, Nr. 1, Januar 1987 (1987-01), Seiten 43-52, XP002127860 IEEE COMPUTER SOCIETY, New York, US ISSN: 0018-9162

## Beschreibung

In Prozessoren oder Mikroprozessoren wird vor arithmetischen oder logischen Operationen mit unterschiedlichen Datentypen durch Programmsequenzen eine Datentypkonvertierung herbeigeführt. Die Datentypkonvertierung mittels Programmsequenzen hat jedoch den Nachteil, daß sie die Verarbeitungsgeschwindigkeit eines Prozessors oder Mikroprozessors herabsetzt. Desweiteren weist diese Art der Datentypkonvertierung den Nachteil auf, daß das Bussystem des Prozessors durch die zur Datentypkonvertierung erforderlichen Operations-Code zusätzlich belastet wird.

Neben der angesprochenen Datentypkonvertierung werden objektorientierte Programmsprachen eingesetzt, um spezielle Probleme zu lösen. Eine Datentypkonvertierung kann auch durch eine objekt-orientierte Befehlsstruktur erreicht werden. Die objekt-orientierte Befehlsstruktur bringt jedoch den Nachteil einer Vergrößerung des Programmcodes mit sich, da jeder Befehl für jede Kombination von Datentypen im Speicher hinterlegt sein muß. Eine Vergrößerung des Programmcodes hat ebenfalls eine Verringerung der Verarbeitungsgeschwindigkeit zur Folge.

Der Erfindung liegt die Aufgabe zugrunde, eine Schaltungsanordnung und ein Verfahren zur Datentypkonvertierung anzugeben, die die oben genannten Nachteile vermeidet.

Die Aufgabe wird durch die Merkmale des Patentanspruchs 1 und 8 gelöst.

Die Erfindung bringt den Vorteil mit sich, daß eine Datenkonvertierung ohne eine Verringerung der Verarbeitungsgeschwindigkeit des Prozessors durchgeführt werden kann.

Die Erfindung bringt den Vorteil mit sich, daß Datentypumwandlungen selbständig durchgeführt werden.

Die Erfindung bringt den weiteren Vorteil mit sich, daß der Programmcode nicht vergrößert werden muß.

Die Erfindung bringt den weiteren Vorteil mit sich, daß eine datentypgerechte Datentypumwandlung mit einer datentypgerechten Adreßberechnung durchgeführt wird.

Weitere Besonderheiten sind in den Unteransprüchen angegeben.

Die Schaltungsanordnung und das Verfahren werden aus der nachfolgenden näheren Erläuterung zu einem Ausführungsbeispiel anhand von Zeichnungen ersichtlich.

Es zeigen:
- Figur 1: den Aufbau einer Objektadresse,
- Figur 2: den Aufbau eines Registers,
- Figur 3: den Aufbau interner Register,
- Figur 4: eine Ausgestaltung eines Prozessors und
- Figur 5: die Ausgestaltung des Prozessors mit einer objekt-orientierten Datentypkonvertierung entsprechend der Erfindung.

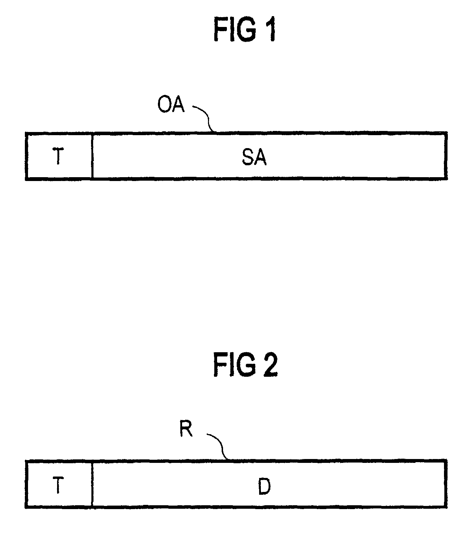

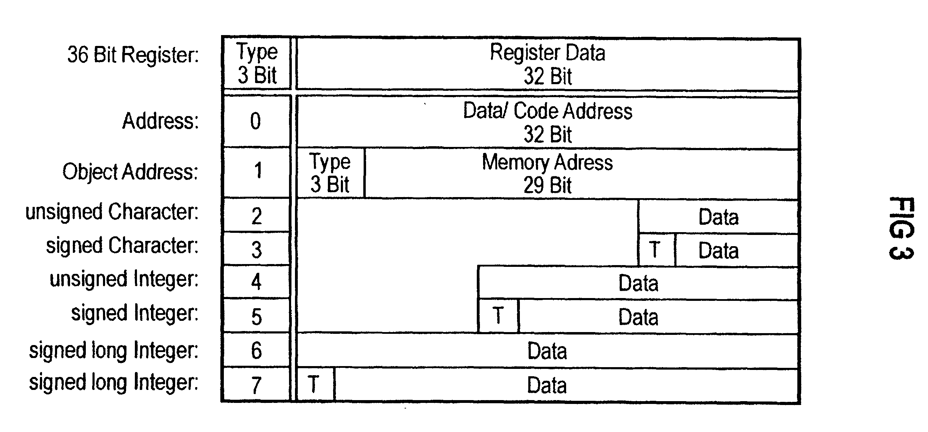

In Figur 1 ist eine Aufteilung einer Objektadresse OA gezeigt. Diese Objektadresse OA unterteilt sich in einen Bereich für die Angabe des Typs T des Objekts und eine zum Objekt gehörende Speicheradresse SA. Die Speicheradresse SA gibt den Speicherplatz eines Objektes in einem Speicherbereich eines Speichers an. Der Objekttyp T und die Speicheradresse SA werden bei einer Deklaration des Objektes von einem Compiler vergeben und als eine Einheit behandelt. Objekte können beispielsweise Daten, Adressen oder Codeadressen sein.

In Figur 2 ist die Aufteilung eines Registers R wiedergegeben. Dieses Register R ist in einen ersten Bereich zur Angabe des Daten- bzw. Objekttyps T und in einen zweiten Bereich zur Abspeicherung der Daten bzw. Objekte D aufgeteilt.

In Figur 3 ist eine detaillierte Angabe der Aufteilung des Registers R und der Objektadresse OA wiedergegeben. In dieser Darstellung werden die abzuspeichernden Adressen oder Daten wie oben angedeutet in einen ersten und zweiten Bereich unterteilt. In einem Register R mit einer Länge von 35 Bit, sind beispielsweise 3 Bit für die Angabe des Objekttyps T und 32 Bit für das abzuspeichernde Objekt, die Adresse oder Daten vorgesehen. Die 32 Bit für das Objekt können ein Datenwort, eine Daten- oder Code-Adresse oder eine Speicheradresse mit einer Angabe über den Typ der Speicheradresse sein. Weitere Unterteilungen sind in Figur 3 dargestellt.

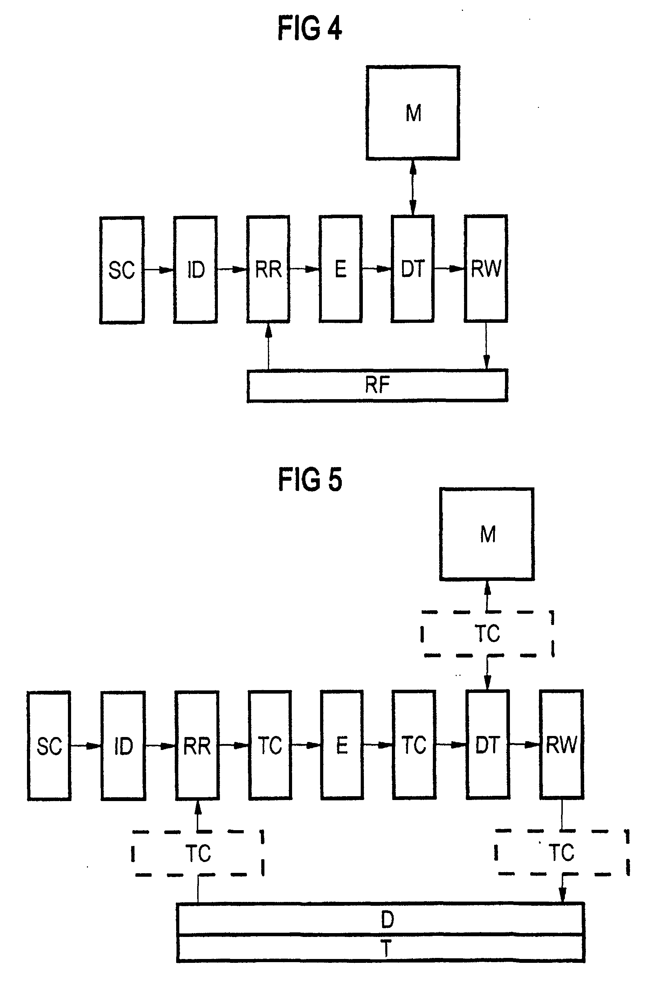

In der Figur 4 ist ein Prozessor, insbesondere ein RISC-Prozessor dargestellt. In dieser Darstellung sind die wesentlichen, in einer Pipeline angeordneten Komponenten des RISC-Prozessors ein Sequenz-Controler SC, ein Instruction-Decoder ID, eine Register-Read-Einheit RR, eine Execute-Einheit E, eine Data-Transfer-Einheit DT und eine Register-Write-Einheit RW. Daten werden entweder von einer externen Speichereinheit M über die Data-Transfer-Einheit DT ein- oder ausgelesen. Daten, die für den laufenden Verarbeitungsprozeß von Bedeutung sind, werden über die Register-Write-Einheit RW in einem Register-File RF abgelegt und nach Bedarf wieder durch die Register-Read-Einheit RR gelesen. In der Execute Einheit E werden logische und arithmetische Befehle ausgeführt.

In Figur 5 ist der RISC-Prozessor mit mindestens einer eine Datentypkonvertierung ausführenden Datentyp-Konvertierungseinheit TC ausgebildet. Diese Datentyp-Konvertierungseinheit kann beispielsweise vor und nach der Execute-Einheit E oder zwischen der externen Speichereinheit M und der Data-Transfereinheit DT angeordnet sein. Die Datentyp-Konvertierungseinheit kann ebenso zwischen der Register-Write-Einheit RW und dem Register-File RF und zwischen dem Register-File RF und der Register-Read-Einheit RR angeordnet werden, um eine notwendig werdende Datenkonvertierung durchzuführen. Die gezeigte Anordnung mit einer Datentyp-Konvertierungseinheit TC in der Datenpipeline des RISC-Prozessors bringt den Vorteil mit sich, daß die Taktfrequenz der Pipeline unverändert bleibt.

In der vorliegenden Erfindung wird die Objektadresse OA in einen ersten und zweiten Bereich unterteilt. Aus dem ersten Bereich ermittelt die Datentyp-Konvertierungseinheit TC den Datentyp T und aus dem zweiten Bereich die physikalische Adresse SA.

Bei einem Speicherzugriff wird eine Adressenberechnung von indizierten Load- und Store-Befehlen mit Hilfe des Objekttyps ein Adreßoffset entsprechend der Objektgröße für die physikalische Adresse SA ermittelt.

Bei einem Load-Befehl ist die Speicheradresse des Objektes bekannt. Das Objekt wird mit der Angabe des Typs in einem Register des Prozessors abgelegt.

Bei einem Store-Befehl werden die zu speichernden Daten und der dazugehörige Objekttyp aus den Register entnommen, in den Objekttyp der Zieladresse umgewandelt und unter der Zieladresse abgelegt.

Execute-Befehle enthalten neben den Registernummern von Quell- und Ziel-Registern auch den zugehörigen Objekttyp für das Zielregister. Der Objekttyp der Operation wird vom Objekttyp des Zielregisters abgeleitet. Eine Verarbeitungseinheit in der Execute-Einheit E für beispielsweise eine arithmetische Operation wird anhand des Objekttyps ausgewählt. Da vor einer arithmetischen Operation die Objekttypen der Quellund Ziel-Register bekannt sind, kann eine Datentypumwandlung entsprechend vorgenommen werden. Vor einer Operation werden die Quell-Daten in einen Datentyp umgewandelt, der von einer Execute-Einheit E eines RISC-Prozessors verarbeitbar ist. Nach einer Operation kann das Ergebnis in den Datentyp eines Zielregisters umgewandelt werden.

Bei einer Multiplikation von einer ersten und zweiten Variablen werden durch den Compiler jeweils die physikalische Adresse und der Datentyp generiert. Beim Laden der ersten und zweiten Variablen werden die Datentypen im Register-File RF abgelegt. Der Programmabschnitt - Load Variable 1 - signalisiert dem Prozessor die Größe der ersten Variablen, beispielsweise ein 8 Bitwert oder 16 Bitwert. Der Datentyp-Konvertierungseinheit TC wird mit dem Datentyp mitgeteilt, ob es sich um eine signed-Integer-Variable oder eine unsigned-Integer-Variable handelt. Nach dem Laden der ersten Variablen werden die zur zweiten Variablen gehörenden Daten geladen. Nach dem beim Lesen der Daten aus dem Register-File RF die Datentyp-Konvertierungseinheit TC die beiden Datentypen der ersten und zweiten Variablen kennt, werden die Datentypen einander angepaßt und die eigentliche Operation, wie beispielsweise eine Multiplikation in der nachgeordneten Execute-Einheit E ausgeführt.

Die Datentyp-Konvertierungseinheit TC kann nach der Execute-Einheit E in die Datenpipeline des RISC-Prozessors an verschiedenen Stellen eingeführt werden. Ein Fehlen der Datentyp-Konvertierungseinheit TC nach der Execute-Einheit E hat zur Folge, daß die Ergebnisdaten, die in der Execute-Einheit E gebildet wurden, zusammen mit einem sich aus der jeweiligen Operation ergebenden Datentyp im Register-File RF abgelegt werden.

Bei einem Store-Befehl werden sowohl die Daten als auch der jeweilige Datentyp wieder aus dem Register-File RF ausgelesen und vor der Execute-Einheit E einer Datentyp-Konvertierungseinheit TC zugeführt. Dort kann die Datentyp-Umwandlung entsprechend dem Datentyp der Zieladresse erfolgen.

Bei einer indizierten Adressierung braucht der Datentyp-Konvertierungseinheit TC nur der einfache Index mitgeteilt zu werden, und der Prozessor kann sich anhand des Datentyps der Adresse den Byte-Offset errechnen. So ist beispielsweise bei einem normalen Integer-Wert, der eine Länge von 2 Byte aufweist, bekannt, daß der Index entsprechend verdoppelt werden muß und zur physikalischen Adresse dazu addiert werden muß. Dies bringt den Vorteil mit sich, daß zeitaufwendige Umrechnungen zur Ermittlung der Adreß-Indizes entfallen.

Ein weiterer Vorteil der indizierten Adreßberechnung liegt darin, daß mit ein und demselben Programmcode eine Tabelle von Daten mit short Integer-Werten oder long Integer-Werten oder normalen Integer-Werten bearbeitet werden kann. Der Programmcode braucht dabei die genannten Datentypen nicht zu unterscheiden, da der Prozessor sich seine Adressen anhand der Datentypen selbst berechnet.

## Patentansprüche

1. Schaltungsanordnung zur Datenkonvertierung in einem Prozessor mit mindestens einer eine logische oder arithmetische Operation ausführenden Einheit (E),
**dadurch gekennzeichnet,**
**daß** eine objektorientierte Datenkonvertierungseinheit (TC) zur Erkennung eines Typs (T) eines Objektes (D) und einer Objektadresse (OA) vor der die logische oder arithmetische Operation ausführenden Einheit (E) angeordnet ist, und aufgrund der mit einer Objektadresse (OA) und dem Objekt (D) mitgeführten Typinformation die Datenkonvertierungseinheit (TC) den Typ (T) des Objektes (D) erkennt und vor einer Operation die Objekte (D) bei einer Ungleichheit angleicht oder einen vorbestimmten Typ des Objektes (D) erzeugt.

2. Schaltungsanordnung nach Anspruch 1,
**dadurch gekennzeichnet,**
**daß** ein Speicherplatz für eine Objektadresse (OA) und ein Speicherplatz eines Registers (R) jeweils in einen ersten und zweiten Bereich (T,SA; T, D) aufgeteilt ist, wobei im ersten Bereich jeweils ein Typ (T) des Objektes (SA, D) abgelegt ist.

3. Schaltungsanordnung nach Anspruch 1,
**dadurch gekennzeichnet,**
**daß** die objektorientierte Datenkonvertierungseinheit (TC) nach der eine logische oder eine arithmetische Operation ausführenden Einheit (E) vorgesehen ist.

4. Schaltungsanordnung nach Anspruch 1,
**dadurch gekennzeichnet,**
**daß** die objektorientierte Datenkonvertierungseinheit (TC) vor dem Abspeichern des Objektes (D) in einem externen Speicher (M) und einem Register-File (RC) angeordnet ist.

5. Schaltungsanordnung nach Anspruch 1,
**dadurch gekennzeichnet,**
**daß** ein Register-File (RC) in einen Speicherbereich für Daten und einen Speicherbereich für eine jeweilige Typangabe der Daten unterteilt ist.

6. Schaltungsanordnung nach Anspruch 1,
**dadurch gekennzeichnet,**
**daß** dieser ein Reduced Instruction Set Computer (RISC) ist.

7. Schaltungsanordnung nach Anspruch 1,
**dadurch gekennzeichnet,**
**daß** dieser ein Complex Instruction Set Computer (CISC) ist.

8. Verfahren zur Datenkonvertierung in einem Prozessor mit mindestens einer eine logische oder arithmetische Operation ausführenden Einheit (E),
**dadurch gekennzeichnet,**
**daß** durch eine Typinformation (T) in einer Objektadresse (OA) und durch eine Typinformation (T) eines Objektes (D) eine objektorientierte Datenkonvertierung durchgeführt wird und bei einer Ungleichheit der durch eine logische oder arithmetische Operation zu verknüpfenden Objekte (D) der Typ der Objekte einander angeglichen oder ein vorbestimmter Objekttyp eines Objektes (D) erzeugt wird.

9. Verfahren nach Anspruch 8,
**dadurch gekennzeichnet,**
**daß** ein Speicherplatz für eine Objektadresse (OA) und ein Speicherplatz eines Registers (R) jeweils in einen ersten und zweiten Bereich (T, SA; T, D) aufgeteilt wird und im ersten Bereich (T) jeweils eine Typinformation der im zweiten Bereich der Objektadresse (OA) abgelegten Speicheradresse (SA) und der im zweiten Bereich abgelegten Daten (D) des Registers (R) vermerkt wird.

## Claims

1. Circuit arrangement for data conversion in a processor having at least one unit (E) which performs a logic or arithmetic operation,
**characterized**
**in that** an object-oriented data conversion unit (TC) for identifying a type (T) for an object (D) and an object address (OA) is arranged upstream of the unit (E) performing the logic or arithmetic operation, and the data conversion unit (TC) takes the type information included with an object address (OA) and the object (D) as a basis for identifying the type (T) of the object (D) and, before an operation, makes the objects (D) more alike if they are unequal or produces a predetermined type of object (D).

2. Circuit arrangement according to Claim 1,
**characterized**
**in that** a memory location for an object address (OA) and a memory location in a register (R) are respectively split into a first and a second area (T, SA; T, D), with the first area respectively storing a type (T) for the object (SA, D).

3. Circuit arrangement according to Claim 1,
**characterized**
**in that** the object-oriented data conversion unit (TC) is provided downstream of the unit (E) performing a logic or arithmetic operation.

4. Circuit arrangement according to Claim 1,
**characterized**
**in that** the object-oriented data conversion unit (TC) is arranged upstream of the storage of the object (D) in an external memory (M) and a register file (RC).

5. Circuit arrangement according to Claim 1,
**characterized**
**in that** a register file (RC) is subdivided into a memory area for data and a memory area for a respective type indicator for the data.

6. Circuit arrangement according to Claim 1,
**characterized**
**in that** this is a Reduced Instruction Set Computer (RISC).

7. Circuit arrangement according to Claim 1,
**characterized**
**in that** this is a Complex Instruction Set Computer (CISC).

8. Method for data conversion in a processor having at least one unit (E) which performs a logic or arithmetic operation,
**characterized**
**in that** type information (T) in an object address (OA) and type information (T) for an object (D) perform object-oriented data conversion and, if the objects (D) to be combined by a logic or arithmetic operation are unequal, the types of the objects are made more alike or a predetermined object type for an object (D) is produced.

9. Method according to Claim 8,
**characterized**
**in that** a memory location for an object address (OA) and a memory location in a register (R) are respectively split into a first and a second area (T, SA; T, D), and the first area (T) is respectively used to record type information for the memory address (SA) stored in the second area of the object address (OA) and for the data (D) in the register (R) which are stored in the second area.

## Revendications

1. Circuit pour la conversion de données dans un processeur avec au moins une unité (E) exécutant une opération logique ou arithmétique, **caractérisé en ce qu**'une unité de conversion de données (TC) orientée objet pour la reconnaissance d'un type (T) d'objet (D) et d'une adresse objet (OA) est placée avant l'unité (E) exécutant l'opération logique ou arithmétique, et l'unité de conversion de données (TC) reconnaît le type (T) d'objet (D) en raison de l'information type transportée avec une adresse objet (OA) et l'objet (D), et adapte les objets (D) avant une opération en cas de différence ou crée un type prédéfini de l'objet (D).

2. Circuit selon la revendication 1, **caractérisé en ce qu**'un espace mémoire pour une adresse objet (OA) et un espace mémoire pour un registre (R) sont divisés respectivement en une première zone et une deuxième zones (T, SA ; T, D), un type (T) de l'objet (SA, D) étant respectivement stocké dans la première zone.

3. Circuit selon la revendication 1, **caractérisé en ce que** l'unité de conversion de données (TC) orientée objet est prévue après l'unité (E) exécutant une opération logique ou arithmétique.

4. Circuit selon la revendication 1, **caractérisé en ce que** l'unité de conversion de données (TC) orientée objet est placée avant le stockage en mémoire de l'objet (D) dans une mémoire externe (M) et dans un fichier registre (RC).

5. Circuit selon la revendication 1, **caractérisé en ce qu**'un fichier registre (RC) est divisé en une zone mémoire pour des données et une zone mémoire pour une indication de type de données respective.

6. Circuit selon la revendication 1, **caractérisé en ce que** celui-ci est un ordinateur à jeu d'instructions réduit (RISC) (Reduced Instruction Set Computer).

7. Circuit selon la revendication 1, **caractérisé en ce que** celui-ci est un ordinateur à jeu d'instructions complexe (CISC) (Complex Instruction Set Computer).

8. Procédé pour la conversion de données dans un processeur avec au moins une unité (E) exécutant une opération logique ou arithmétique, **caractérisé en ce qu**'une conversion de données orientée objet est exécutée par une information de type (T) dans une adresse objet (OA) et par une information de type (T) d'un objet (D), et en cas de différence des objets (D) à enchaîner par une opération logique ou arithmétique, le type des objets est adapté l'un par rapport à l'autre ou un type d'objet prédéfini d'un objet (D) est créé.

9. Procédé selon la revendication 8, **caractérisé en ce qu**'un espace mémoire pour une adresse objet (OA) et un espace mémoire pour un registre (R) sont divisés respectivement en une première et une deuxième zones (T, SA ; T, D), et dans la première zone (T) est respectivement mentionnée une information de type de l'adresse mémoire (SA) stockée dans la deuxième zone de l'adresse objet (OA) et des données (D) du registre (R) stockées dans la deuxième zone.
